## Europäisches Patentamt
## European Patent Office
## Office européen des brevets

(11) Veröffentlichungsnummer: **0 247 450**
**A2**

# EUROPÄISCHE PATENTANMELDUNG

(21) Anmeldenummer: **87107006.6**

(22) Anmeldetag: **14.05.87**

(51) Int. Cl.⁴: **G 07 F 7/10**

(30) Priorität: **16.05.86 DE 3616677**

(43) Veröffentlichungstag der Anmeldung: **02.12.87**
**Patentblatt 87/49**

(84) Benannte Vertragsstaaten: **AT BE CH DE ES FR GB GR IT LI LU NL SE**

(71) Anmelder: **Hinz, Carl Heinz, Nonnenwaldweg 32, D-6229 Schlangenbad-Georgenborn (DE)**

(72) Erfinder: **Hinz, Carl Heinz, Nonnenwaldweg 32, D-6229 Schlangenbad-Georgenborn (DE)**

(74) Vertreter: **Seids, Heinrich, Dipl.-Phys., Bierstadter Höhe 15 Postfach 5105, D-6200 Wiesbaden (DE)**

(54) **Identifikations-System.**

(57) Ein Identifikations-System mit einem Ausweis (11) wird in fester Verbindung mit einer Identitäts-Bestätigungseinrichtung (15) gebracht, die in Form eines Gerätes mit kartenartigem Gehäuse (14) ausgebildet ist und ein Anzeigefeld (Display 17) und eine Betätigungseinrichtung (Tastatur 16) aufweist, um nur bei Eingabe eines einzigen Codes in die Betätigungseinrichtung (Tastatur 16) eine Identitätsbestätigung in Form einer Anzeige (20) im Anzeigefeld (Display 17) für eine begrenzte Zeitdauer direkt sichtbar zu machen. Die Identitäts-Bestätigungseinrichtung (15) ist bevorzugt elektronischer Art und enthält dazu ein Schaltwerk mit elektronischer Logikschaltung und einen eine Vergleichsspeicherung aufweisenden Identifikations-Symbolspeicher, die zur Erkennung des eingegebenen Codes und Abgabe bei Eingabe des richtigen Codes die Bestätigungsanzeige (20) im Display (17) hervorrufen. In besonders vorteilhafter Weiterbildung kann eine elektronische Rechnerschaltung zum Schutz der Programmierung und Speicherung in dem Schaltwerk und dem Identifikations-Symbolspeicher zugegeben werden, wobei diese elektronische Rechnerschaltung zugleich auch mit Funktionen bekannter Taschenrechner ausgestattet und zwischen Rechnerbetrieb und Identifikationsbetrieb umschaltbar sein kann.

**0 247 450**

Wiesbaden, den 11. Mai 1987
H 612                          S/ha

Carl Heinz Hinz
Nonnenwaldwerg 32
6229 Schlangenbad 5

=================================================
Identifikations-System
=================================================

Die Erfindung betrifft ein Identifikations-System mit einem den jeweiligen Inhaber betreffende, direkt lesbare Angaben tragenden Ausweis und einer mit dem Ausweis fest verbundenen, auf die Person des Ausweisinhabers bezogenen Identitäts-Bestätigungseinrichtung. Bei bekannten Personalausweisen sind solche Identitäts-Bestätigungen bisher in Form eines Lichtbildes und/oder einer Unterschrift des Ausweisinhabers vorgesehen. Es hab sich aber herausgestellt, daß bei Verlust von solchen Ausweisen Lichtbilder ausgewechselt und Unterschriften gefälscht werden können. Besondere Gefahr besteht bei Verlust von Scheckkarten, Kreditkarten usw., die nur die Unterschrift des Inhabers als Identitätsbestätigung aufweisen. Demzufolge entstehen in der Praxis tatsächlich erhebliche Schäden in Verbindung mit unrechtmäßiger Benutzung von Scheckkarten und Kreditkarten.

Bei Geldausgabe-Automaten an Banken ist es bekannt, daß der Bankkunde zum Abheben von Geld am Automaten außer dem Einstecken seiner Scheckkarte bzw. Kreditkarte noch eine ihm allein bekannte Zahl in den Geldausgabeautomaten eingeben muß. Diese Einrichtung läßt sich aber nicht für alltägliche bargeldlose Geschäftsabwicklung an Ladenkassen usw. benutzen, bei der gerade die größte Gefahr der unrechtmäßigen Benutzung von Ausweismitteln, wie Kreditkarten und Scheckkarten besteht.

Aus EP-A2-0 057 602 ist ein Kreditwertträger (Value-Token) bekannt, der an einem von dem jeweiligen Kreditinstitut aufgestellten Terminal vom Kreditkonto des jeweiligen Inhabers aufladbar ist, um den in diesem Kreditwertträger gespeicherten Kredit an Verkaufsstellen angebrachten Abbuchungsautomaten entsprechend getätigten Geschäften nach und nach automatisch abbuchen zu lassen. Dieser Kreditwertträger ist mit einem Display ausgestattet, an welchem sich der Inhaber die Höhe seines Kredites anzeigen lassen kann. Ferner ist dieser Kreditwertträger mit festen Speicherungen hinsichtlich Kreditinstitut und Konto des Inhabers versehen sowie mit einer Identitäts-Bestätigungseinrichtung, die durch Eingabe eines nur dem rechtmäßigen Inhaber bekannten Codes die elektronischen Einrichtungen des Kreditwertträgers für jeweils eine Kreditwert-Abbuchung freigibt. Die Freigabe der elektronischen Einrichtungen dieses Kreditwertträgers für eine Abbuchung wird jedoch nicht am Kreditwertträger bzw. dessen Display sichtbar angezeigt, sondern nur an der Reaktion des automatischen Einzahlungsgerätes bemerkbar.

Demgegenüber ist es Aufgabe der Erfindung, ein Identifikations-System zu schaffen, das einen den jeweiligen Inhaber betreffende, direkt lesbare Angaben tragenden Ausweis und eine vom jeweiligen Benutzer zu betätigende Identitäts-Bestätigungseinrichtung aufweist, die direkt sichtbar werden läßt, ob der jeweilige Benutzer die richtige Betätigung vorgenommen hat, so daß beim Vorzeigen dieses Identifikations-Systems aus einer Bestätigungsanzeige auf einen Blick sichtbar ist, ob die Identität des Ausweisbenutzers mit derjenigen des rechtmäßigen Ausweisinhabers bestätigt wird.

Diese Aufgabe wird erfindungsgemäß dadurch gelöst, daß die Identitäts-Bestätigungseinrichtung des Identifikations-Systems als mit dem Ausweis fest verbundenes, zur Benutzung des Ausweises zu betätigendes Gerät ausgebildet ist, das ein Anzeigefeld (Display) und eine Betätigungseinrichtung (Tastatur) enthält und dazu ausgebildet ist, nur bei Eingabe eines allein dem Ausweisinhaber bekannten Codes in die Betätigungseinrichtung (Tastatur) eine Bestätigungsanzeige in dem Anzeigefeld (Display) für eine begrenzte Zeitdauer direkt sichtbar zu machen.

Auf diese Weise wird ein mit einer zusätzlichen Identitätsbestätigung ausgestatteter Ausweis geschaffen, der es erforderlich macht, daß der Benutzer des Ausweises einen ihm bekannten Code anwendet, um derjenigen Person, der er den Ausweis vorzeigt, eine an dem Ausweis selbst sichtbare Bestätigung gibt, daß er als Benutzer auch der rechtmäßige Ausweisinhaber ist. Das erfindungsgemäße Identifikations-System läßt sich in allen Fällen benutzen, in welchen Ausweise, insbesondere Kreditkarten und Scheckkarten gegenüber Personen vorzuzeigen sind, also in solchen Anwendungsfällen, bei denen eine Identitäts-Bestätigung bisher nicht möglich war. Da die im Anzeigefeld des erfindungsgemäßen Identifikations-Systems erscheinende Bestätigungsanzeige naturgemäß auch von Automaten lesbar sein kann, ist das erfindungsgemäße Identifikations-System universell benutzbar.

In bevorzugter Ausführungsform der Erfindung ist der Ausweis fest auf einen die Bestätigungseinrichtung aufnehmenden, sowie deren Betätigungseinrichtung (Tastatur) und Anzeigefeld (Display) tragenden, kartenförmigen Gehäuse angebracht. Das erfindungsgemäße Identifikations-System bildet auf diese Weise eine leicht handhabbare Einheit, die von der sie benutzenden Person ebenso leicht mitgeführt werden kann wie ein herkömmlicher Ausweis.

Im Rahmen der Erfindung kann die Betätigungseinrichtung eine von einer Tastatur her betätigbare und eine Anzeige auf einem Display hervorrufende elektronische Schaltungsanordnung enthalten, die ein Schaltwerk mit elektronischer Logikschaltung und einen mit einer Vergleichsspeicherung fest programmierten Identifikations-Symbolspeicher aufweist, die mittels BUS-(Leitungs-)Sytemen derart miteinander verbunden sind, daß eine von der Tastatur kommende Eingabe auf eine erwartete Folge von Tasten-betätigungen (Code) erkannt und mittels des Identifikations-Symbolspeichers mit der dort einprogrammierten Vergleichsspeicherung verglichen wird und nur bei Feststellung der Äquivalenz von Eingabe und Vergleichsspeicherung ein ebenfalls fest gespeichertes Symbol oder Symbolfolge als Betätigungsanzeige auf das Display gelegt wird. Die einzugebende Folge von Tastenbetätigungen ist dabei vorzugsweise hinsichtlich Anzahl und Inhalt bzw. Art der Symbole unterschiedlich von der Bestätigungsanzeige. Die Bestätigungsanzeige ist somit zusätzlich in einem Speicher der elektronischen Schaltungsanordnung gespeichert und wird erst dann für die Weiterleitung an das Display freigegeben, wenn die gesamte eingegebene Folge von Tastenbetätigungen mit der Vergleichsspeicherung im Identifikations-Symbolspeicher äquivalent ist. Aus Art und Symbolzahl der Bestätigungsanzeige läßt sich daher keinerlei Rückschluß auf Länge und Inhalt der für die Betätigung der Bestätigungseinrichtung notwendigen Folge von Tastenbetätigungen ziehen.

Bevorzugt ist dabei das Schaltwerk derart programmiert, daß jeweils nur eine Eingabe entsprechend einer einzigen Tastenbetätigung zum Vergleich mit der jeweiligen Stelle der Vergleichsspeicherung auf den Identifikations-Symbolspeicher gelegt und nur bei Feststellung von Äquivalenz die Bahn zum Vergleich einer nächsten Eingabe einer Tastenbetätigung mit der nächsten Stelle der Vergleichsspeicherung freigegeben wird, während bei Verneinung der Äquivalenz das Schaltwerk auf seine vor der ersten Tastenbetätigung eingenommene Ausgangsstellung zurückgeht. Durch den hierdurch erreichten Vergleich der durch Tastenbetätigungen vorgenommenen Eingabe des Codes von Tastenbetätigung zu Tastenbetätigung, also von Stelle zu Stelle wird ein Höchstmaß von Vergleichssicherheit erreicht.

Eine weitere wesentliche Absicherung wird im Rahmen der Erfindung dadurch erreicht, daß die Betätigungseinrichtung eine mit der Tastatur und dem Display verbundene elektronische Rechnerschaltung enthält und das BUS-(Leitungs-)System zwischen dem Schaltwerk und dem Identifikations-Symbolspeicher über diese Rechnerschaltung geführt ist und die Rechnerschaltung eine den Zugang von der Tastatur zum Schaltwerk sowie zum Identifikations-Symbolspeicher blockierende und den direkten Ausgang vom Schaltwerk und vom Identifikations-Symbolspeicher zum Display blockierende Programmierungs-Sicherungs-Sperre enthält. Diese Programmierungs-Sicherungs-Sperre verhindert, daß die Programmierung des Schaltwerks und die Programmierung bzw. Speicherung des Identifikations-Symbolspeichers von einem unbefugten ausfindig gemacht werden könnten.

Bevorzugt ist bei einer solchen gesicherten Identitäts-Bestätigungseinrichtung das BUS-(Leitungs-)System sowohl zwischen der elektronischen Rechnerschaltung und dem Schaltwerk als auch zwischen der elektronischen Rechnerschaltung und dem Identifikations-Symbolspeicher mit je einem Adress-BUS, einem Daten-BUS und einem Steuer-BUS versehen, wobei im Steuer-BUS eine vom Schaltwerk über die elektronische Rechnerschaltung zum Identifikations-Symbolspeicher führende Identifikationsleitung aktivierbar ist.

Bei dieser besonders gesicherten Identitäts-Betätigungseinrichtung kann bevorzugt die elektronische Rechnerschaltung zusätzlich mit Funktionen bekannter Taschenrechner ausgestattet sein. Das erfindungsgemäße Identifikations-System läßt sich dadurch auch als Taschenrechner benutzen, was beispielsweise bei Identifikations-Systemen in Art von Scheckkarten und Kreditkarten besonders sinnvoll und vorteilhaft erscheint. Bei dieser Möglichkeit zur Nutzung als Taschenrechner empfiehlt es sich, eine zusätzliche Funktionstaste in der Tastatur zum wahlweisen Umschalten auf Rechnerbetrieb und Identifikationsbestrieb vorzusehen.

In bevorzugter Ausführungsform der Erfindung sind die elektronische Rechnerschaltung, das Schaltwerk und der Identifikations-Symbolspeicher als Chips ausgebildet und zu einem Verarbeitungschip vereinigt. Dabei können das Schaltwerk und der Identifikations-Symbolspeicher auf den Rechnerschaltungs-Chip integriert sein.

Bevorzugt ist bei einem erfindungsgemäßen Identifikations-System mit elektronischer Identitäts-Bestätigungseinrichtung die Logikschaltung des Schaltwerks unlöschbar und beim Herstellungsgang programmiert. Dabei kann die Logikschaltung des Schaltwerks derart ausgebildet und programmiert sein, daß bei Überschreiten eines vorher festgelegten Zeitabstandes zwischen zwei aufeinanderfolgenden Tastenbetätigungen für die Erkennungseingabe das Schaltwerk in die Ausgangsstellung zurückfällt.

Bei einem erfindungsgemäßen Identifikations-System mit elektronischer Identitäts-Betätigungseinrichtung kann ferner der Identifikations-Symbolspeicher ein nicht veränderbarer, bei Herstellung programmierter Halbleiterspeicher sein.

Bei einem erfindungsgemäßen Identifikations-System mit elektronischer Identitäts-Bestätigungseinrichtung kann eine Weiterbildung und Verbesserung noch dahingehend vorgesehen werden, daß der Identifikations-Symbolspeicher mit zwei abzugebenden Anzeigen programmiert ist, und zwar einer Bestätigungsanzeige und einer Fehleranzeige, wobei aufgrund richtiger Erkennungseingabe die Bestätigungsanzeige und aufgrund fehlerhafter oder zwischenzeitlich verzögerter Erkennungseingabe die Fehleranzeige anstelle der Erkennungsanzeige aktiviert und auf das Display gegeben wird.

Um die Handhabung des erfindungsgemäßen Identifikations-Systems zu erleichtern, kann eine sichtbare Wiedergabe der gespeicherten Bestätigungsanzeige bei oder zusätzlich zu den übrigen direkt lesbaren Angaben des Ausweises vorgesehen sein.

Ein Ausführungsbeispiel der Erfindung wird im folgenden anhand der Zeichnung näher erläutert. Es zeigen:

Fig. 1   ein erfindungsgemäßes Identifikations-System in Form einer Kreditkarte in Vorderansicht;

Fig. 2   die Kreditkarte gemäß Figur 1 in rückwärtiger Ansicht und

Fig. 3   ein Druckschaltbild der in der Kreditkarte nach Fig. 1 und 2 benutzten elektronischen Identitäts-Bestätigungseinrichtung.

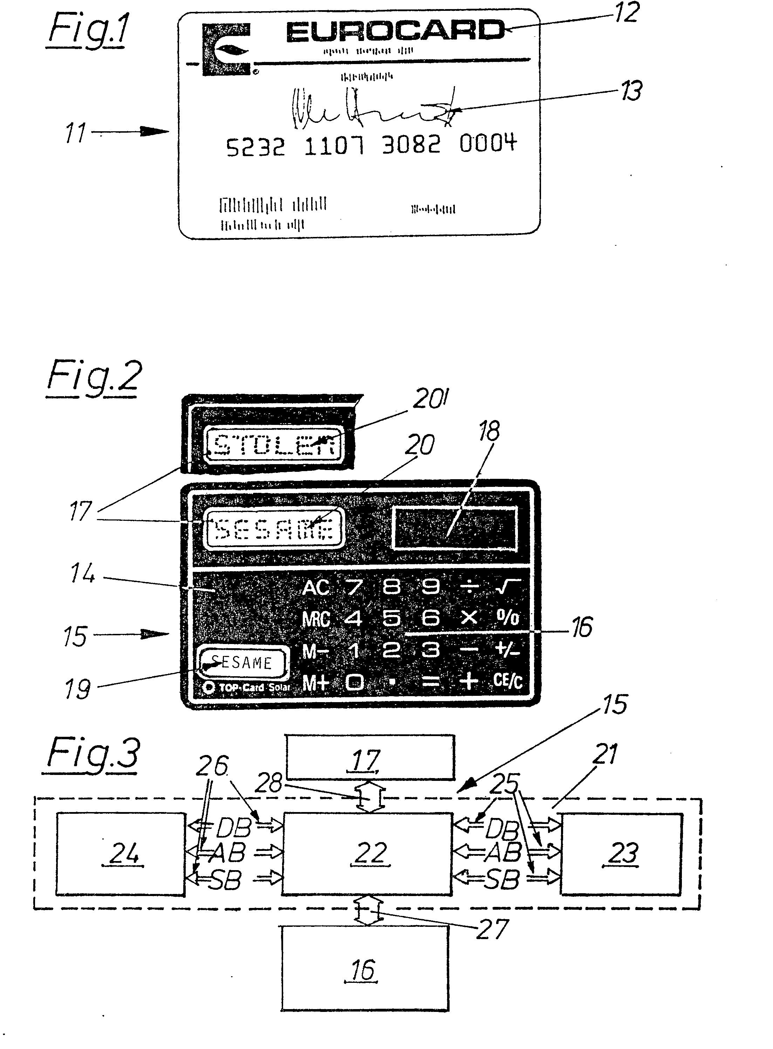

Das in Figur 1 und Figur 2 gezeigte Identifikations-System hat an seiner Vorderseite einen Ausweis 11 in Form einer Kreditkarte, der neben sonstigen Angaben den Namen 12 des Kreditkartenunternehmens und die persönliche Unterschrift 13 des rechtmäßigen Ausweisinhabers enthält. Dabei ist der Ausweis auf die eine Außenfläche eines Gehäuses 14 angebracht, das die in Verbindung mit Figur 3 näher erläuterte elektronische Identitäts-Bestätigungseinrichtung 15 enthält, deren Betätigungseinrichtung in Form einer Tastatur 16 und deren Anzeigefeld in Form eines Display 17 auf der Rückseite des Identifikations-Systems angeordnet sind. Das Gehäuse 14 ist kartenförmig ausgebildet und ergibt dadurch ausreichend Innenraum zur Aufnahme der elektronischen Schaltungsanordnung und trotzdem gute Handhabungseigenschaften für den Ausweis 11.

Auf der Rückseite des Identifikations-Systems trägt das Gehäuse 14 ferner eine Solarzelle 18 als Stromquelle für den Betrieb der elektronischen Identitäts-Bestätigungseinrichtung 15. Schließlich ist auf der Rückseite des Gehäuses 14 noch eine feste Wiedergabe 19 angebracht, die diejenige Anzeige im Display 17 wiedergibt, die die Identität des Benutzers mit dem rechtmäßigen Inhaber bestätigen soll. Diese Bestätigungsanzeige 20 ist im dargestellten Beispiel das Wort "SESAME". Wurde die Bestätigungseingabe falsch oder mit zu großer zeitlicher Verzögerung eingegeben, so erscheint im dargestellten Beispiel im Display 17 eine Verneinungsanzeige 20', die deutlich von der fest angebrachten Wiedergabe 19 verschieden ist, beispielsweise das Wort "STOLEN".

Wie Figur 2 zeigt, ist im dargestellten Beispiel sowohl die Bestätigungsanzeige 20 als auch die Verneinungsanzeige 20' aus Zeichen zusammengesetzt, die nicht in der Tastatur 16 enthalten sind. Auch kann die Anzahl der Zeichen in der Bestätigungsanzeige 20 bzw. Verneinungsanzeige 20' enthaltenen Zeichen unterschiedlich von der Anzahl der Folge von Tastenbetätigungen sein. So kann beispielsweise die für das Hervorrufen der Bestätigungsanzeige 20 erforderliche Folge von Tastenbetätigungen sein: "5 x 4 + 3 + 2 - 1".

Wie die Tastatur 16 in Figur 2 erkennen läßt und im folgenden in Verbindung mit Figur 3 erläutert wird, ist im dargestellten Beispiel die elektronische Identitäts-Bestätigungseinrichtung 15 zur Benutzung als Taschenrechner geeignet. Zum Umschalten von Rechnerbetrieb auf Identifikationsbetrieb und umgekehrt.kann beispielsweise ein zweifaches oder dreifaches kurzzeitig aufeinanderfolgendes Betätigen der Taste "AC" vorgesehen sein.

Anstelle der in Figur 2 ersichtlichen Bestätigungsanzeige 20 könnte auch ein sonstiges von dem jeweiligen Kreditinstitut bekanntgegebenes Wort oder Symbol, beispielsweise eine bildliche Darstellung, vorgesehen sein, das dann auch bei der festen Wiedergabe 19 vorgesehen wäre. Anstelle der Verneinungsanzeige 20' kann auch vorgesehen sein, daß bei falscher oder zeitlich verzögerter Erkennungseingabe überhaupt keine Anzeige auf dem Display 17 erscheint.

Um die Erkennungsanzeige 20 bzw. die Verneinungsanzeige 20' im Unterschied zu der Rechneranzeige deutlicher hervortreten zu lassen, ist bevorzugt ein Display für punktweise Auflösung von auf ihm wiederzugebenden alphanumerischen Zeichen vorzusehen.

Wie Figur 3 zeigt, ist die elektronische Identitäts-Bestätigungseinrichtung 15 einen Verarbeitungschip 21 auf, in welchem eine elektronische Rechnerschaltung 22, vorzugsweise in Form eines Rechner-Chips, ein Schaltwerk 23, ebenfalls vorzugsweise in Art eines Chips und ein Identifikations-Symbolspeicher 24, ebenfalls vorzugsweise als Chip enthalten sind. Zwischen der elektronischen Rechnerschaltung 22 und dem Schaltwerk 23 ist ein BUS-System 25 und zwischen der elektronischen Rechnerschaltung 22 und dem Identifikations-Symbolspeicher 24 ein BUS-System 26 angeordnet. Jedes dieser beiden BUS-Systeme 25 und 26 enthält einen Daten-BUS DB, einen Adress-BUS AB und einen Steuer-BUS SB. Zwischen der elektronischen Rechnerschaltung 22 und der Tastatur 16 sind Eingabeleitungen 27 und zwischen der elektronischen Rechner-Schaltung 22 und dem Display 17 Ausgabeleitungen 28 angebracht. Dabei ist die elektronische Rechnerschaltung 22 mit Programmierungs-Sicherungs-Sperren ausgestattet, die den direkten Zugang von der Tastatur 16 über die Eingabeleitungen 27 auf das Schaltwerk 23 und den Identifikations-Symbolspeicher 24 sowie den direkten Ausgang vom Identifikations-Symbolspeicher 24 und dem Schaltwerk 23 über die Ausgabeleitungen 28 auf das Display 17 sperren.

Falls die elektronische Rechnerschaltung 22, das Schaltwerk 23 und der Identifikations-Symbolspeicher 24 in Form von Chips ausgebildet sind, können das Schaltwerk 23 und der Identifikations-Symbolspeicher 24 direkt auf den Chip der elektronischen Rechnerschaltung 22 integriert sein.

Der Identifikations-Symbolspeicher 24 ist im dargestellten Beispiel ein bei Herstellung unveränderbar programmierter Halbleiterspeicher, in welchem eine Vergleichsspeicherung für den als Folge von Tastenbetätigungen einzugebenden Erkennungscode in einzelnen, der Eingabefolge bzw. Folge von Tastenbetätigungen entsprechenden Stellen enthalten ist. Diese Stellen sind mittels im Steuer-BUS SB aktivierbaren Identifikationsleitungen einzeln vom Schaltwerk 23 her ansteuerbar, wobei über diese Identifikationsleitungen auch umgekehrt die entsprechenden Stellen des Schaltwerkes 23 ansteuerbar sind.

Ferner enthält der Identifikations-Steuerspeicher 24 eine über eine aktivierbare Datenleitung im Daten-BUS (DB) auf die elektronische Rechnerschaltung 22 zu übergebende feste Steuerung für die Bestätigungsanzeige 20 und ebenso eine über eine andere aktivierbare Datenleitung im Daten-BUS DB auf die elektronische Rechnerschaltung zu übergebende feste Speicherung für die Verneinungsanzeige 20'.

Das Schaltwerk 23 enthält in fester, bei der Herstellung eingegebener Programmierung eine elektronische Logikschaltung mit der Anzahl der vorgesehenen Tastenbetätigungen für die Eingabe des Betätigungscodes entsprechender Anzahl von Stellen. Jede dieser Stellen der Logikschaltung ist auf ein durch den vorgesehenen Code bestimmtes durch Tastenbetätigung hervorgerufenes Signal bzw. Signalfolge einprogrammiert. Ferner ist diese Logikschaltung derart programmiert, daß sie bei Zugang eines Signals oder einer Signalfolge zu der jeweiligen Stelle eine zu der entsprechenden Stelle des

Identifikations-Symbolspeichers führende Identifikationsleitung aktiviert und über diese Identifikationsleitung
wiederum die Antwort des Identifikations-Symbolspeichers
übernimmt, ob das dorthin geführte Signal bzw. Signalfolge
der Speicherung in dieser Stelle äquivalent ist oder nicht.
Bei Feststellung von Äquivalenz wird im Schaltwerk 23 auf
die nächste Stelle weitergeschaltet und zwar wiederum zur
Aufnahme eines von der Tastatur über die Rechnerschaltung
22 ankommenden Signals oder Signalfolge in die nächste
Stelle und Aktivierung einer Identifikations-Leitung, die
zur nächsten Stelle des Identifikations-Symbolspeichers 24
führt, um dort wiederum den Vergleich zwischen eingegebenem
Signal bzw. Signalfolge und Speicherung vorzunehmen.
Sind sämtliche Stellen des Identifikations-Symbolspeichers
24 auf diese Weise abgefragt und wurde dabei auch für
die letzte Abfragung Äquivalenz festgestellt, so aktiviert
das Schaltwerk eine Steuerleitung im Steuer-BUS SB, die
zur Speicherung der Bestätigungsanzeige im Identifikations-
Symbolspeicher 24 führt und veranlaßt, daß die Bestätigungsanzeige über eine aktivierte Leitung im Daten-BUS DB auf
die Rechnerscahltung 22 gegeben wird. Die Rechnerschaltung
22 wiederum gibt diese Anzeige über die Ausgabeleitung 28
auf das Display 17.

Wird während der Abfragung des Identifikations-Symbolspeichers
24 durch das Schaltwerk 23 an einer Stelle Nicht-Äquivalenz
des zugeführten Signals oder der zugeführten Signalfolge
mit der Speicherung festgestellt, so stellt sich das
Schaltwerk 23 auf seine Ausgangsstellung zurück, die es
vor der ersten Tastenbetätigung eingenommen hatte und
aktiviert dabei eine andere Steuerleitung im Steuer-BUS SB,
die zur Speicherung der Verneinungsanzeige 20' im Identifikations-Symbolspeicher 24 führt, so daß die Verneinungsanzeige über eine Datenleitung im Daten-BUS DB auf die
Rechnerschaltung 22 und von dort über die Ausgabeleitungen
28 auf das Display gegeben wird.

Die elektronische Rechnerschaltung 22 ist im dargestellten Beispiel mit Funktionen eines Taschenrechners ausgestattet. Die elektronische Rechnerschaltung 22 ist daher zwischen Rechnerbetrieb und Identifikationsbetrieb umschaltbar. Bei Rechnerbetrieb sind die BUS-(Leitungs-)Systeme 25 und 26 abgeschaltet und daher das Schaltwerk 23 und der Identifikations-Symbolspeicher 24 von der elektronischen Rechnerschaltung abgetrennt. Durch Umschalten auf Identifikationsbetrieb werden innerhalb der elektronischen Rechnerschaltung 22 die Rechnerfunktionen abgeschaltet und die Verbindungen über die BUS-(Leitungs-)Systeme 25 und 26 zu dem Schaltwerk 23 und dem Identifikations-Symbolspeicher 24 hergestellt. Dieses Umschalten kann mittels der Taste "AC" vorgenommen werden, wobei zunächst durch erstmaliges Betätigen der Taste AC jegliche Anzeige auf dem Display 17 gelöscht wird. Durch anschließendes zweifaches oder dreifaches Betätigen der Taste AC wird dann die Umschaltung innerhalb der Rechner-Schaltung 22 von der jeweils bestehenden Betriebsart auf die jeweils andere Betriebsart vorgenommen.

Die Rechnerschaltung 22 ist derart ausgebildet, daß auch bei Identifikationsbetrieb die auf dem Display erscheinende Bestätigungsanzeige 20 oder Verneinungsanzeige 20' sofort bei einer weiteren Tastenbetätigung erlischt. Ferner enthält die Rechnerschaltung 22 oder das Schaltwerk 23 ein Schaltglied, das nach Ablauf einer vorher festgelegten Zeit, beispielsweise zwischen 10 und 30 Sekunden bei Identifikationsbetrieb die Löschung einer Bestätigungsanzeige oder Verneinungsanzeige vom Display veranlaßt. Dieses Zeitglied veranlaßt auch das Zurückgehen des Schaltwerks 23 auf seine Ausgangsstellung, falls bei Identifikationsbetrieb während der Eingabe zwischen zwei aufeinanderfolgenden Tastenbetätigungen eine Pause zwischen 10 und 30 Sekunden eintritt. Auch in diesem Fall ist mit dem Rücklaufen des Schaltwerkes 23 in die Ausgangsstellung die Ausgabe der Verneinungsanzeige 20' am Display 17 verbunden.

0 247 450

12 a

B e z u g s z e i c h e n l i s t e

11    Ausweis

12    Namensangabe

13    Unterschrift

14    Gehäuse

15    Identitäts-Bestätigungseinrichtung

16    Tastatur

17    Display

18    Solarzellen

19    Wiedergabe

20    Bestätigungsanzeige

20'   Verneinungsanzeige

21    Verarbeitungschip

22    Rechnerschaltung

23    Schaltwerk

24    Identifikations-Symbolspeicher

25    BUS-System

26    BUS-System

27    Eingabeleitung

28    Ausgabeleitung


AB    Adress-BUS

DB    Daten-BUS

SB    Steuer-BUS

Patentansprüche

1) Identifikations-System mit einem den jeweiligen Inhaber betreffende, direkt lesbare Angaben tragenden Ausweis (11), wie Personalausweis, Kreditkarte, Scheckkarte u.dgl., und einer mit dem Ausweis (11) fest verbundenen, auf die Person des Ausweisinhabers bezogenen Identitäts-Bestätigungseinrichtung (15), dadurch gekennzeichnet, daß die Identitäts-Bestätigungseinrichtung (15) als mit dem Ausweis (11) fest verbundenes, zur Benutzung des Ausweises (11) zu betätigendes Gerät ausgebildet ist, das ein Anzeigefeld (Display 17) und eine Betätigungseinrichtung (Tastatur 16) enthält und dazu ausgebildet ist, nur bei Eingabe eines allein dem Ausweisinhaber bekannten Codes in die Betätigungseinrichtung (Tastatur 16) eine Bestätigungsanzeige (20) in dem Anzeigefeld (Display 17) für einen begrenzten Zeitraum direkt sichtbar zu machen.

2) Identifikations-System nach Anspruch 1, dadurch gekennzeichnet, daß der Ausweis (11) fest auf einen die Identitäts-Bestätigungseinrichtung (15) aufnehmenden, sowie deren Betätigungseinrichtung (Tastatur 16) und Anzeigefeld (Display 17) tragenden, kartenförmigen Gehäuse (14) angebracht ist.

3) Identifikations-System nach Anspruch 1 oder 2, dadurch gekennzeichnet, daß die Identitäts-Bestätigungseinrichtung (15) eine von einer Tastatur (16) her betätigbare und eine Anzeige (20) auf einem Display (17) hervorrufende elektronische Schaltungsanordnung (Verarbeitungschip 21) enthält, die ein Schaltwerk (23) mit elektronischer Logikschaltung und einen mit einer Vergleichsspeicherung fest programmierten Identifikations-Symbolspeicher (24) aufweist, die mittels BUS-(Leitungs-)Systemen (25, 26) derart miteinander verbunden sind, daß eine
von der Tastatur (16) kommende Eingabe auf eine erwartete
Folge von Tastenbetätigungen (Code) erkannt und mittels
des Identifikations-Symbolspeichers (24) mit der
dort einprogrammierten Vergleichsspeicherung verglichen
wird und nur bei Feststellung der Äquivalenz von
Eingabe und Vergleichsspeicherung ein ebenfalls fest
gespeichertes Symbol oder Symbolfolge als Betätigungsanzeige (20) auf das Display (17) gelegt wird.

4) Identifikations-System nach Anspruch 3, dadurch gekennzeichnet, daß das Schaltwerk (23) derart programmiert
ist, daß jeweils nur eine Eingabe entsprechend einer
einzigen Tastenbetätigung zum Vergleich mit der jeweiligen
Stelle der Vergleichsspeicherung auf den Identifikations-
Symbolspeicher (24) gelegt und nur bei Feststellung
von Äquivalenz die Bahn zum Vergleich einer nächsten
Eingabe einer einzigen Tastenbetätigung mit der nächsten
Stelle der Vergleichsspeicherung freigegeben wird,
während bei Verneinung der Äquivalenz das Schaltwerk
(23) auf seine vor der ersten Tastenbetätigung eingenommene Ausgangsstellung zurückgeht.

5) Identifikations-System nach Anspruch 3 oder 4, dadurch
gekennzeichnet, daß die Identitäts-Bestätigungseinrichtung
(15) eine mit der Tastatur (16) und dem Display (17)
verbundene elektronische Rechnerschaltung (22) enthält
und das BUS-(Leitungs-)System (25, 26) zwischen dem
Schaltwerk (23) und dem Identifikations-Symbolspeicher
(24) über diese Rechnerschaltung (22) geführt ist und
die Rechnerschaltung (22) direkten Zugang von der
Tastatur (16) zum Schaltwerk (23) sowie zum Identifikations-Symbolspeicher (24) blockierende und direkten
Ausgang vom Schaltwerk (23) und dem Identifikations-
Symbolspeicher (24) zum Display (17) blockierende
Programmierungs-Sicherungs-Sperren enthält.

6) Identifikations-System nach Anspruch 5, dadurch gekennzeichnet, daß das BUS-(Leitungs-)System (25, 26) sowohl zwischen der elektronischen Rechnerschaltung (22) und dem Schaltwerk (23) als auch zwischen der elektronischen Rechnerschaltung (22) und dem Identifikations-Symbolspeicher (24) je einen Adress-BUS-(AB), einen Daten-BUS (DB) und einen Steuer-BUS (SB) aufweist, wobei im Steuer-BUS mindestens eine vom Schaltwerk (23) über die elektronische Rechnerschaltung (22) zum Identifikations-Symbolspeicher (24) führende Identifikationsleitung aktivierbar ist.

7) Identifikations-System nach Anspruch 5 oder 6, dadurch gekennzeichnet, daß die elektronische Rechnerschaltung (22) zusätzlich mit Funktionen bekannter Taschenrechner ausgestattet ist.

8) Identifikations-System nach Anspruch 7, gekennzeichnet durch eine zusätzliche Funktionstaste (AC) in der Tastatur (16) zum wahlweisen Umschalten auf Rechnerbetrieb und Identifikationsbetrieb.

9) Identifikations-System nach einem der Ansprüche 5 bis 8, dadurch gekennzeichnet, daß die elektronische Rechnerschaltung (22), das Schaltwerk (23) und der Identifikations-Symbolspeicher (24) als Chips ausgebildet und zu einem Verarbeitungschip (21) vereinigt sind.

10) Identifikations-System nach Anspruch 9, dadurch gekennzeichnet, daß das Schaltwerk (23) und der Identifikations-Symbolspeicher (24) auf den Rechnerschaltungs-Chip integriert sind.

11) Identifikations-System nach einem der Ansprüche 3 bis 10, dadurch gekennzeichnet, daß die Logikschaltung des Schaltwerks (23) unlöschbar bei dessen Herstellungsvorgang programmiert ist.

12) Identifikations-System nach einem der Ansprüche 3 bis 11, dadurch gekennzeichnet, daß die Logikschaltung des Schaltwerks (23) derart ausgebildet und programmiert ist, daß bei Überschreiten eines vorher festgelegten Zeitabstandes zwischen zwei aufeinanderfolgenden Tastenbetätigung für die Erkennungseingabe das Schaltwerk (23) in die Ausgangsstellung zurückfällt.

13) Identifikations-System nach einem der Ansprüche 3 bis 12, dadurch gekennzeichnet, daß der Identifikations-Symbolspeicher (24) ein nicht veränderbarer, bei Herstellung programmierter Halbleiterspeicher ist.

14) Identifikations-System nach einem der Ansprüche 3 bis 13, dadurch gekennzeichnet, daß der Identifikations-Symbolspeicher (24) zusätzlich zu seiner Vergleichsspeicherung mit zwei Anzeigen programmiert ist, und zwar einer Bestätigungsanzeige (20) und einer Verneinungsanzeige (20'), wobei aufgrund richtiger Erkennungseingabe die Betätigungsanzeige (20) und aufgrund fehlerhafter oder zwischenzeitlich verzögerter Erkennungseingabe die Verneinungsanzeige (20') anstelle der Bestätigungsanzeige (20) aktiviert und auf das Display (17) gegeben wird.

15) Identifikations-System nach einem der Ansprüche 1 bis 14, gekennzeichnet, durch eine sichtbare Wiedergabe der gespeicherten Bestätigungsanzeige (20) bei oder zusätzlich zu den übrigen direkt lesbaren Angaben (13, 14) des Ausweises (11).

_Fig.1_

_Fig.2_

_Fig.3_